# EUROPÄISCHE PATENTSCHRIFT

(11) **EP 4 087 234 B1**
(45) Veröffentlichungstag und Bekanntmachung des Hinweises auf die Patenterteilung: **01.05.2024**
(21) Anmeldenummer: 22164278.8
(22) Anmeldetag: 25.03.2022
(51) Int. Cl.: H04N 23/81, H04N 23/84, H04N 25/133, H04N 25/60, H04N 25/672, H04N 25/701

(54) **KAMERA UND VERFAHREN ZUR ERFASSUNG VON BILDDATEN**
CAMERA AND METHOD FOR DETECTING IMAGE DATA
CAMÉRA ET PROCÉDÉ DE DÉTECTION DES DONNÉES D'IMAGE

(30) Priorität: 05.05.2021 DE 102021111639
(43) Veröffentlichungstag der Anmeldung: 09.11.2022
(73) Patentinhaber: SICK AG, 79183 Waldkirch (DE)
(72) Erfinder: Müller, Romain, 79252 Stegen (DE); Ruf, Hannes, 79271 St. Peter (DE)

(56) Entgegenhaltungen:
- DE-U1-202019 106 363
- US-A1- 2008 284 880
- US-A1- 2010 085 433

## Beschreibung

Die Erfindung betrifft eine Kamera und ein Verfahren zur Erfassung von Bilddaten nach dem Oberbegriff von Anspruch 1 beziehungsweise 15.

Die Bilddaten einer Kamera werden in vielen industriellen und logistischen Anwendungen genutzt. Damit können verschiedene Vorgänge automatisiert werden. Neben diversen Mess-, Manipulations- und Prüfaufgaben ist das automatische Sortieren von Objekten anhand von Codes bekannt, die mit Hilfe der Bilddaten gelesen werden. Dazu werden Barcodes und verschiedene zweidimensionale Codes gelesen, wie ein Maxicode oder ein Aztec-Code, oder auch Beschriftungen, die mit einer Texterkennung (OCR) dekodiert werden.

In einer typischen Anwendungssituation, etwa an einem Fertigungsband, bei einer Gepäckabfertigung in Flughäfen oder der automatisierten Sortierung von Paketen in Logistikzentren, werden die Objekte an der Kamera vorbei gefördert und Bilddaten der Objekte aufgenommen. In dieser Relativbewegung zwischen Objekten und Kamera eignen sich insbesondere Zeilenkameras, die eine besonders hohe Auflösung und Geschwindigkeit erreichen. Die sukzessive erfassten einzelnen Bildzeilen werden anhand der bekannten oder gemessenen Bandgeschwindigkeit zusammengesetzt. Gerade bei schnellen Bandapplikationen hat das Vorteile, da eine hohe Framerate benötigt wird und das einfache Aneinanderreihen von Bildzeilen im Gegensatz zu einem Zusammenfügen von Einzelbildern (Stitching) einer Matrixkamera ohne größeren Rechenaufwand möglich ist.

Herkömmliche Zeilenkameras nehmen meist nur ein monochromes Bild auf, das auch als Grauwertbild oder Schwarzweißbild bezeichnet wird. Damit wird die beste Photonenausbeute und daher das beste Signal-Rausch-Verhältnis erreicht. Für die Aufnahme farbiger Bilder wird eher auf Matrixkameras zurückgegriffen. Die verbreitetste Farbgewinnung ist das pixelweise Vorsehen von jeweils zwei grünen, einem roten und einem blauen Filter in einem Bayer-Pattern. Es gibt jedoch auch alternative Farbmuster, die beispielsweise einen Weißkanal hinzufügen (RGBW) oder subtraktive Grundfarben verwenden, etwa rot, gelb und blau (RYBY).

Auch Farbzeilenkameras sind bekannt. Sie besitzen beispielsweise drei Zeilen in rot, grün und blau (RGB), eine alternierende Anordnung dieser Grundfarben auf einer einzigen Zeile oder in Nachahmung des Bayer-Patterns eine Zeile mit alternierenden roten und blauen Pixeln und eine zweite rein grüne Zeile. Nachteilig an allen diesen Farbbildsensoren ist, dass durch die Farbfilter Empfangslicht verloren geht und daher ein Schwarzweißbild für Anwendungen wie das Codelesen mit höheren Ansprüchen an die Auflösung überlegen bleibt. Die Farbinformation kann also nur um den Preis einer schlechteren Leistung bezüglich der Schwarzweißauswertung gewonnen werden.

Eine entscheidende Größe für die Qualität von Bilddaten und die Visualisierung für einen Benutzer ist das Signal-Rausch-Verhältnis (SNR, Signal-to-Noise-Ratio). Eine Farbaufnahme beeinträchtigt das Signal-Rausch-Verhältnis, da die Farbfilter die Anzahl der detektierbaren Photonen reduzieren. Prinzipiell kann einem sinkenden Signal-Rausch-Verhältnis begegnet werden, indem die Beleuchtung verstärkt, die Belichtungszeit verlängert oder die Apertur erhöht wird oder ein empfindlicherer Bildsensor verwendet wird. Derlei Maßnahmen werden aber ohnehin schon optimiert, und beispielsweise die Beleuchtung begegnet wegen der Augensicherheit einer harten Grenze. Den spezifischen Nachteil einer Farbaufnahme gegenüber einer Schwarzweißaufnahme löst dies also nicht auf. Eine andere Möglichkeit sind Bildnachbearbeitungen beispielsweise durch Rauschfilter oder neuronale Netze. Auch das wird aber ohnehin häufig schon genutzt und mindert deshalb den Abstand zwischen der Qualität von monochromen und farbigen Bilddaten nicht. Zudem werden durch herkömmliche Rauschfilter auch Kanten und sonstige gewünschte Strukturen der Farbbilder verwischt.

Die DE 20 2019 106 363 U1 offenbart einen Codeleser zum Lesen von optischen Codes, der mindestens eine Doppelzeile als Bildsensor verwendet, von denen Empfangspixel mindestens einer Zeile für weißes Licht und Empfangspixel der übrigen Zeile für nur eine Farbe empfindlich sind. Damit lassen sich dann ein Grauwertbild und ein Farbbild aufnehmen. In einigen Ausführungsformen wird eine Grundfarbe aus dem Grauwertbild und zwei anderen Grundfarben rekonstruiert. Mit dem geschilderten Problem des schlechteren Signal-Rausch-Verhältnisses des Farbbildes befasst sich das Dokument jedoch nicht.

Aus der US 2010/0316291 A1 und der US 2012/0002066 A1 ist jeweils ein codelesendes Gerät bekannt, das Bilder mit einer Pixelmatrix aufnimmt. Die meisten Pixel sind monochrom, in einer Gitteranordnung sind farbige Pixel eingestreut. Diese farbigen Pixel bilden ein Bayer-Pattern. Die US 2012/0002066 A1 diskutiert auch Filter zur Bildnachbearbeitung, die aber den Unterschied in Farb- und Schwarzweißbildern nicht berücksichtigen, womit es bei einem deutlich schlechteren Signal-Rausch-Verhältnis der Farbbilder bleibt.

Die US 2008/0284880 A1 offenbart ein Verfahren zur Rauschunterdrückung in Bildsignalen. Es wird einerseits ein vollständiges Bild über das gesamte Spektrum einschließlich des Infrarotbereichs und andererseits ein Farbbild aufgenommen. In dem vollständigen Bild werden Kanten detektiert. Eine Tiefpassfilterung des Farbbildes erhält diese Kanten, indem die Filterkoeffizienten an Kantenpositionen abgesenkt werden.

Die US 2010/0085433 A1 beschreibt ein ähnliches Verfahren. Es werden anhand einer Kantendetektion in dem vollständigen Bild Bereiche festgelegt, in denen eine Rauschunterdrückung des Farbbildes erfolgt, und diese Bereiche nehmen die Kanten aus.

Es ist daher Aufgabe der Erfindung, eine Bildaufnahme mit Aufnahmekanälen unterschiedlicher Qualität zu verbessern, insbesondere von Schwarzweiß- und Farbbildaten.

Diese Aufgabe wird durch eine Kamera und ein Verfahren zur Erfassung von Bilddaten nach Anspruch 1 beziehungsweise 15 gelöst. Ein Bildsensor der Kamera nimmt mit zwei Aufnahmekanälen unterschiedlicher Empfindlichkeit erste Bilddaten mit ersten Pixeln und zweite Bilddaten mit zweiten Pixeln auf. Die Bilddaten sind überlappend, entsprechen demnach mindestens teilweise und vorzugsweise vollständig demselben Objektbereich. Erste Pixel und zweite Pixel sind einander dadurch zugeordnet, dass ihr Sichtbereich einem gleichen Ausschnitt des Sichtfeldes der Kamera entsprechen. Einander zugeordnete erste und zweite Pixel nehmen somit dieselben Objektstrukturen auf. Dabei unterscheiden sich die beiden Aufnahmekanäle und folglich die einander zugeordneten ersten und zweiten Pixel in einer Modalität voneinander, insbesondere spektral. Die unterschiedliche Empfindlichkeit oder Sensitivität der beiden Aufnahmekanäle und das resultierende unterschiedliche Signal-Rausch-Verhältnis der ersten und zweiten Bilddaten ist eher eine zu tragende Konsequenz als ein gewünschter Effekt, wobei für die Erfindung nicht die Gründe der unterschiedlichen Empfindlichkeit maßgebend sind, sondern dass es sie gibt.

Eine Steuer- und Auswertungseinheit verarbeitet die Bilddaten mit einem Bildverarbeitungsverfahren. Vorzugsweise ist die Kamera als Codeleser zum Lesen eines optischen Codes und deren Steuer- und Auswertungseinheit dafür ausgebildet, einen zu lesenden Code in den Bilddaten aufzufinden und den darin codierten Inhalt auszulesen. Als Vorverarbeitungsschritt werden mit einem Rauschunterdrückungsfilter Rauscheffekte der zweiten Bilddaten unterdrückt. Dazu werden die zweiten Pixel vorzugsweise einzeln bearbeitet, sei es sequentiell oder in einer parallelisierten Architektur zumindest teilweise gleichzeitig. Das jeweils betrachtete zweite Pixel erhält einen neuen, angepassten Wert auf Basis seiner Nachbarschaft der zweiten Pixel in seiner Umgebung, vorzugsweise unter Einbeziehung seines ursprünglichen Wertes. Das betrachtete zweite Pixel wechselt dann, wie bei einer Bildverarbeitung mittels Filter üblich, bis alle zweiten Pixel oder die gewünschte Teilmenge beziehungsweise der gewünschte Bildabschnitt bearbeitet ist.

Die Erfindung geht von dem Grundgedanken aus, die Rauschunterdrückung der zweiten Bilddaten an eine Ähnlichkeit der ersten Bilddaten zu binden. Die Umgebung zweiter Pixel des jeweils betrachteten zweiten Pixels wird dementsprechend neu gewichtet. Dazu wird das erste Pixel herangezogen, das dem betrachteten zweiten Pixel zugeordnet ist, und dessen Umgebung erster Pixel. Das ist mit anderen Worten auf den Objektbereich bezogen der gleiche Bildausschnitt der ersten Bilddaten, den in den zweiten Bilddaten das Rauschunterdrückungsfilter berücksichtigt. Es wird geprüft, welche ersten Pixel der Umgebung in den ersten Bilddaten zu dem ersten Pixel ähnlich sind, das dem betrachteten zweiten Pixel zugeordnet ist. Die den ähnlichen ersten Pixeln zugeordneten zweiten Pixel fließen in der Bearbeitung mit dem Rauchunterdrückungsfilter stärker in den neuen Wert des jeweiligen betrachteten zweiten Pixels ein. Entsprechend tragen in dem Rauschunterdrückungsfilter zweite Pixel in der Umgebung des betrachteten zweiten Pixels weniger bei, deren zugeordnete erste Pixel zu dem ersten Pixel nicht oder weniger ähnlich sind, das dem betrachteten zweiten Pixel zugeordnet ist. Dahinter steht die Vorstellung, über die Ähnlichkeit im genaueren, da empfindlicheren, ersten Aufnahmekanals im unempfindlicheren zweiten Aufnahmekanal diejenigen zweiten Pixel der Umgebung aufzufinden, die einer selben Objektstruktur zugehören wie das betrachtete zweite Pixel.

Die Erfindung hat den Vorteil, dass in gewisser Weise die höhere Empfindlichkeit und das bessere Signal-Rausch-Verhältnis des ersten Aufnahmekanals auf den zweiten Aufnahmekanal übertragen wird. In den zweiten Bilddaten wird das Rauschen reduziert, sie gewinnen dadurch an Qualität und Signal-Rausch-Verhältnis, und dies ohne Verlust oder nur mit geringem Verlust an räumlicher Auflösung. Ein herkömmliches Rauschunterdrückungsfilter, das nur innerhalb der zweiten Bilddaten arbeitet, würde hingegen unweigerlich Kanten verschmieren. Das erfindungsgemäße Vorgehen bleibt einfach und ist mit überschaubaren Rechen- und Speicherkapazitäten auch in Echtzeit zu leisten.

Die Steuer- und Auswertungseinheit ist bevorzugt dafür ausgebildet, für das Rauschunterdrückungsfilter nur zweite Pixel in der Umgebung zu berücksichtigen, deren zugeordnetes erstes Pixel ein Ähnlichkeitskriterium zu dem ersten Pixel erfüllt, das dem jeweiligen betrachteten zweiten Pixel zugeordnet ist. Das ist gleichsam eine Digitalisierung oder Binarisierung derÄhnlichkeit: Zweite Pixel, deren zugeordnete erste Pixel das Ähnlichkeitskriterium nicht erfüllen, werden gar nicht berücksichtigt. Diejenigen zweiten Pixel, deren zugeordnete erste Pixel das Ähnlichkeitskriterium erfüllen, werden vorzugsweise untereinander gleich gewichtet. Alternativ zu einem digitalen Ähnlichkeitskriterium kann eine Gewichtung gewählt werden, die von der Ähnlichkeit abhängt. Für die Gewichte der zweiten Pixel aus der Umgebung des betrachteten zweiten Pixels kann dann eine Gewichtungsfunktion definiert werden, deren Argument der Unterschied des zugeordneten ersten Pixels zu dem ersten Pixel ist, das dem betrachteten zweiten Pixel zugeordnet ist. In allen Fällen kann eine zusätzliche positionsabhängige Gewichtung überlagert werden, beispielsweise ein mit dem Abstand zu dem betrachteten zweiten Pixel fallendes Gewicht.

Das Ähnlichkeitskriterium weist bevorzugt mindestens eine Schwelle auf, mit der ein Unterschied zwischen einem ersten Pixel in der Umgebung und dem zugeordneten ersten Pixel des jeweiligen betrachteten zweiten Pixel bewertet wird. Die Schwelle kann symmetrisch zu dem Wert des ersten Pixels gelegt werden, dass dem jeweiligen betrachteten zweiten Pixel zugeordnet ist. Alternativ sind unterschiedliche Schwellen nach oben und unten denkbar. Erste Pixel in der Umgebung, die in dem so gebildeten Korridor liegen, erfüllen das Ähnlichkeitskriterium, erste Pixel in der Umgebung außerhalb des Korridors nicht.

Das Rauschunterdrückungsfilter ist vorzugsweise ein Mittelungsfilter. Damit wird über die Umgebung des betrachteten zweiten Pixels geglättet oder gemittelt. Allerdings gehen erfindungsgemäß die zweiten Pixel der Umgebung in Abhängigkeit der Ähnlichkeit der zugeordneten ersten Pixel zu demjenigen ersten Pixel ein, das dem betrachteten zweiten Pixel zugeordnet ist. Die Gewichtung kann wie erläutert binär sein, d.h. zweite Pixel tragen bei hinreichender Ähnlichkeit in den zugehörigen ersten Pixeln bei und sonst nicht, oder sie hängt quantitativ von der Ähnlichkeit ab. Wiederum kann in beiden Fällen ein zusätzliches Gewicht hinzukommen, beispielsweise ein mit dem Abstand zum betrachteten zweiten Pixel fallendes Gewicht.

Das Rauschunterdrückungsfilter weist bevorzugt einen Filterkern auf, der eine Umgebung um ein jeweiliges betrachtetes Pixel definiert und dessen Werte insbesondere entsprechend einer Ähnlichkeit erster Pixel in einer Umgebung zu einem zentralen ersten Pixel gesetzt sind. Die Faltung mit einem Filterkern ist an sich ein übliches Vorgehen. Erfindungsgemäß besteht die Besonderheit, dass der Filterkern je betrachtetem zweitem Pixel definiert ist. Der Filterkern hängt von der Umgebung zu dem einen speziellen ersten Pixel ab, das dem jeweiligen betrachteten zweiten Pixel zugeordnet ist. Es handelt sich demnach um einen lokal, nicht global definierten Filterkern, wobei natürlich die Regeln, nach denen der Filterkern entsteht, durchaus vorzugsweise wieder global sind. Die einzelnen Werte oder Gewichte des Filterkerns legen fest, mit welchem Anteil ein zweites Pixel aus der Umgebung in den neuen Pixelwert des jeweils betrachteten zweiten Pixels einfließen soll. Diese Gewichte werden anhand der Ähnlichkeit in den zugeordneten Pixeln der ersten Bilddaten gesetzt.

Ein Filterkern wird vorzugsweise als Matrix mit n Pixeln in allen Richtungen um das betrachtete zweite Pixel definiert. Das betrachtete zweite Pixel kann daher als zentrales zweites Pixel des jeweiligen Filterschritts bezeichnet werden. Die so zentrierte Matrix wird auf die Umgebung der zweiten Pixel gelegt und die Faltung berechnet, insbesondere als Summe über das punktweise Produkt von Filterkern und zweiten Pixeln der Umgebung. Das betrachtete zweite Pixel liegt nur vorzugsweise im Zentrum, wobei eine dezentrale Anordnung auch durch Nullen im Filterkern erreicht werden kann. Aus den gleichen Gründen ist auch eine Matrix keine praktische Einschränkung, sondern nur eine einfache Implementierung für beliebige Umgebungen oder Nachbarschaften, da an den Rändern Nullen für eine beliebige geometrische Form gesetzt werden können.

Die Steuer- und Auswertungseinheit ist bevorzugt dafür ausgebildet, den Filterkern mit Nullen zu belegen, wo ein Ähnlichkeitskriterium nicht erfüllt ist, und/oder mit untereinander gleich großen nichtverschwindenden Werten zu belegen, wo ein Ähnlichkeitskriterium erfüllt ist. Dies ist eine digitale oder binäre Ausführungsform des beschriebenen Filterkerns, der nur zweite Pixel berücksichtigt, deren zugehörige erste Pixel hinreichend ähnlich zu dem ersten Pixel sind, das dem betrachteten zweiten Pixel zugeordnet ist. Anschaulich liegt der Filterkern um das betrachtete zweite Pixel, und ein entsprechender Ausschnitt wird um das zugeordnete erste Pixel in den ersten Bilddaten gelegt. Dort, wo nun die ersten Pixel nicht ausreichend ähnlich zu dem zentralen ersten Pixel sind, werden Nullen im Filterkern gesetzt, um diesen Teil der Umgebung in dem Rauschunterdrückungsfilter unberücksichtigt zu lassen. In den übrigen Teilen des Filterkerns soll die Umgebung der zweiten Pixel berücksichtigt werden, und zwar vorzugsweise mit gleichem Gewicht. Alternativ zu binären Einträgen des Filterkerns können Einträge entsprechend einer Gewichtungsfunktion in Abhängigkeit von der Gewichtung gesetzt werden, wie oben beschrieben. Wiederum ist vorstellbar, die Gewichte noch zu modulieren, etwa mit wachsendem Abstand zum betrachteten zweiten Pixel zu verkleinern.

Die Steuer- und Auswertungseinheit ist bevorzugt dafür ausgebildet zu zählen, wie oft der Filterkern Werte ungleich Null aufweist, und insbesondere den Filterkern mit dieser Anzahl zu normieren. Der Filterkern hat m Einträge ungleich Null, für die das Ähnlichkeitskriterium erfüllt ist. Dieses m wird bestimmt, um sich bei einer Mittelung oder sonstigen Verrechnung auf die richtige Anzahl einfließender Werte zu beziehen. Sofern die nichtverschwindenden Einträge im Filterkern untereinander gleich groß und insbesondere auf Eins gesetzt sind, ist m gleich der Summe, gegebenenfalls noch bis auf einen Skalierungsfaktor. Der Filterkern kann nun noch normiert werden, indem alle Einträge durch m geteilt werden.

Die Steuer- und Auswertungseinheit ist bevorzugt dafür ausgebildet, die Auflösung der ersten Bilddaten und der zweiten Bilddaten aufeinander anzupassen. Je nach Bildsensor haben die ersten Bilddaten und die zweiten Bilddaten originär möglicherweise unterschiedliche Auflösungen. Dies lässt sich ausgleichen, beispielsweise durch Interpolation der schlechter aufgelösten beziehungsweise durch Pixelzusammenfassen (Binning) der besser aufgelösten Bilddaten. In dem Überlappungsbereich der ersten Bilddaten und der zweiten Bilddaten ist dann jedem ersten Pixel genau ein zweites Pixel zugeordnet. Der Überlappungsbereich entspricht, um dies zu wiederholen, einem gemeinsam betrachteten Objektbereich der beiden Aufnahmekanäle und ist vorzugsweise vollständig. Damit gilt die 1:1-Beziehung zwischen ersten und zweiten Pixeln überall. Ohne eine Auflösungsanpassung kann es Mehrfachzuordnungen geben. Die erfindungsgemäße bedingte Rauschunterdrückung funktioniert auch dann, muss aber in der Implementierung mehr Sonder- und Randfälle berücksichtigen.

Der erste Aufnahmekanal ist bevorzugt als Monokanal mit Empfindlichkeit für weißes Licht für die Aufnahme von Bilddaten eines Grauwertbildes ausgebildet, auch als Schwarzweißbild oder monochromes Bild bezeichnet. Der erste Aufnahmekanal weist somit Lichtempfangspixel auf, die für weißes Licht empfindlich sind, was bedeuten soll, dass sie das ganze optische Spektrum wahrnehmen und beispielsweise keine Farbfilter aufweisen. Die Grenze des empfangenen Lichts bilden natürlich die unvermeidbaren Hardwarebeschränkungen der verwendeten Kamerapixel.

Der zweite Aufnahmekanal ist bevorzugt als mindestens ein Farbkanal mit Empfindlichkeit für Licht einer bestimmten Farbe zur Aufnahme von Bilddaten der Farbe ausgebildet. Der zweite Aufnahmekanal weist somit Lichtempfangspixel auf, die nur für Licht in der Farbe des Farbkanals empfindlich sind, beispielsweise durch entsprechende Farbfilter. Die Verteilung der Lichtempfangspixel eines Farbkanals kann verschiedene Muster bilden, dies unterscheidet sich je nach Ausführungsform.

Der zweite Aufnahmekanal weist bevorzugt mehrere Farbkanäle unterschiedlicher Farben auf. Somit entstehen die zweiten Bilddaten in sich nochmals mehrfach, vorzugsweise in den Grundfarben RGB (Rot, Grün, Blau) oder CMY (Cyan, Magenta, Yellow). Jeweilige Einfarbbilder, also beispielsweise ein rotes, grünes und blaues Bild, können in sich oder gemeinsam mit dem erfindungsgemäßen Vorgehen gefiltert werden. Besonders bevorzugt weist der zweite Aufnahmekanal nur zwei Farbkanäle für zwei der drei Grundfarben auf. Somit gibt es keinen Farbkanal und keine Lichtempfangspixel, die für die dritte Grundfarbe empfindlich sind. Die Steuer- und Auswertungseinheit ist besonders bevorzugt dafür ausgebildet, die dritte Grundfarbe mit Hilfe der ersten Bilddaten, d.h. weißen Bilddaten, aus den zwei Grundfarben zu rekonstruieren. Weiß ist eine Überlagerung aller Grundfarben, so dass die dritte Grundfarbe isoliert werden kann, wenn die beiden anderen Grundfarben aufgenommen werden. Die beiden Grundfarben sind vorzugsweise rot und blau. Allgemein führen additive Grundfarben zu besseren Ergebnissen. Gerade das im Bayer-Pattern doppelt vorgesehene grün wird in dieser bevorzugten Ausführungsform nicht aufgenommen, so dass hierfür keine Lichtempfangspixel und kein Farbkanal vorgesehen sein müssen. Bei Bedarf wird grün aus den weißen, roten und blauen Bildinformationen erzeugt. Anschaulich wird damit grün aus G = 3*αW-βR-γB rekonstruiert, wobei α, β, γ Normierungsfaktoren sind und vorzugsweise noch eine Farbkorrektur vorgenommen wird.

Der Bildsensor ist vorzugsweise als Zeilensensor mit mindestens zwei Zeilen von Lichtempfangselementen ausgebildet, wobei insbesondere eine Zeile jeweils vollständig dem ersten Aufnahmekanal oder dem zweiten Aufnahmekanal zugeordnet ist. Die Kamera ist folglich eine Zeilenkamera. Die Aufnahmekanäle sind vorzugsweise aus ganzen Zeilen aufgebaut, beispielsweise bildet die erste Zeile den ersten Aufnahmekanal und die zweite Zeile den zweiten Aufnahmekanal. Das ergibt die höchstmögliche Auflösung in Zeilenrichtung. Insbesondere in Farbkanälen kann es alternativ zu einer durchgehend einfarbigen Zeile auch Muster geben, beispielsweise alternierende Lichtempfangspixel für verschiedene Farben, oder es werden einheitlich farbige Zeilen und gemischt farbige Zeilen miteinander kombiniert. Prinzipiell können in eine Zeile eines Farbkanals auch für weiß empfindliche Lichtempfangselemente eingestreut sein, aber für solche Bildinformationen ist an sich eine andere Zeile des Monokanals zuständig.

Es sind vorzugsweise zwei, drei oder vier Zeilen vorgesehen. Die genannten Zahlen sind hier genaue Angaben, keine Mindestangaben. Mit wenigen Zeilen wird ein besonders kompakter Aufbau des Bildsensors erreicht. Mit zwei Zeilen ergibt sich eine Doppelzeile, ein bis zwei zusätzliche Zeilen sorgen für eine gewisse Redundanz insbesondere für Farbmuster. Weiterhin gehört vorzugsweise eine Zeile jeweils insgesamt zu einem bestimmten Aufnahmekanal.

Die Kamera ist vorzugsweise stationär über einem Strom aufzunehmender Objekte montiert. So werden vorzugsweise Bildzeilen nacheinander aufgenommen und zu einem Bild aneinandergereiht. Bei Barcodes ist alternativ ein Codelesen aus einer einzigen zeilenförmigen Aufnahme denkbar, aber vorzugsweise werden auch Barcodes aus einem derart zusammengesetzten, flächigen Gesamtbild gelesen. Durch einen Zeitverzug beim Auslesen der Bildinformationen der verschiedenen Zeilen können insbesondere die Bildinformationen übereinandergelegt werden, so dass die ersten und zweiten Bilddaten denselben Abschnitten der Objekte entsprechen.

Die Steuer- und Auswertungseinheit ist bevorzugt dafür ausgebildet, aus dem ersten Aufnahmekanal ein Grauwertbild und aus dem zweiten Aufnahmekanal ein Farbbild zu erzeugen. Das Grauwertbild oder Schwarzweißbild wird in voller Auflösung bei hohen Kontrasten und bestmöglichem Signal-Rausch-Verhältnis erfasst. Zugleich wird ein Farbbild gewonnen, das für verschiedene zusätzliche oder alternative Auswertungen verwendet werden kann. Die zusätzliche Farberfassung geht nicht zulasten der Auflösung oder des Signal-Rausch-Verhältnisses in dem Grauwertbild. Im Gegenteil kann dank des erfindungsgemäßen Rauschunterdrückungsfilters die Qualität des Grauwertbildes wenigstens teilweise in das Farbbild übertragen werden.

Das Grauwertbild wird bevorzugt zum Lesen von Codes verwendet, d.h. es wird der in dem Code codierte Inhalt ausgelesen. Codelesen ist hier mit gleicher Qualität möglich wie mit einer herkömmlichen monochromen Kamera, insbesondere Zeilenkamera. Die zusätzlichen Farbinformationen beeinträchtigen das Decodierergebnis nicht. Das Grauwertbild kann ergänzend oder alternativ für andere Zwecke genutzt werden als für ein Codelesen.

Ein Farbbild ist ein Bild im üblichen Sprachgebrauch mit für das menschliche Auge wie üblich erkennbaren Farben etwa in RGB und von einem Einfarbbild zu unterscheiden, das beispielsweise nur die rote Farbinformation enthält. Besonders bevorzugt wird das Farbbild im Zusammenhang mit Codelesen und zu dessen Unterstützung verwendet, um codetragende Objekte und/oder Codebereiche zu erkennen, zu klassifizieren und/oder vom Bildhintergrund zu unterscheiden. Häufig unterscheidet sich der Untergrund des Codes farblich von der Umgebung, oder die Farbinformation kann dafür verwendet werden, ein codetragendes Objekt zu erkennen und vom Hintergrund zu trennen. Alternativ wird das Farbbild für irgendeine andere Funktion genutzt, insbesondere als solches ausgegeben und erst nachgelagert verwendet, sei es für Visualisierungs- und Diagnosefunktionen oder ganz andere Zusatzaufgaben. Das Farbbild weist womöglich eine geringere Auflösung auf als das Graubild, dies kann dann wie oben erwähnt durch Upsampling/Interpolation beziehungsweise Downsampling/Binning angeglichen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Zeilenkamera;
- Fig. 2: eine dreidimensionale Ansicht einer Anwendung der Zeilenkamera in fester Montage über einem Förderband mit Objekten, insbesondere zum Codelesen;
- Fig. 3: eine schematische Darstellung eines zeilenförmigen Bildsensors mit einer roten, einer blauen und einer weißen Zeile;
- Fig. 4: eine schematische Darstellung eines zeilenförmigen Bildsensors mit einer roten, einer blauen und zwei weißen Zeilen;
- Fig. 5: eine schematische Darstellung eines zeilenförmigen Bildsensors mit einer alternierend rot-blauen und einer weißen Zeile;
- Fig. 6: eine schematische Darstellung eines zeilenförmigen Bildsensors mit zwei alternierend rot-blauen und zwei weißen Zeilen;
- Fig. 7: ein Beispielbild mit einem Pixel, dem zur Rauschunterdrückung ein neuer Wert zugewiesen wird, sowie einer Umgebung, die zu dem neuen Wert beiträgt;
- Fig. 8: eine Darstellung der Umgebung gemäß Figur 7 in einem Pixelraster;
- Fig. 9: ein Beispielbild gemäß Figur 7, wobei die zu dem neuen Wert beitragende Umgebung durch ein Ähnlichkeitskriterium in einem anderen Aufnahmekanal maskiert ist;
- Fig. 10: eine Darstellung eines Filterkerns entsprechend der maskierten Umgebung der Figur 9;
- Fig. 11: ein Beispielbild vor einer Rauschunterdrückung; und
- Fig. 12: das Beispielbild gemäß Figur 11 nach erfindungsgemäßer Rauschunterdrückung.

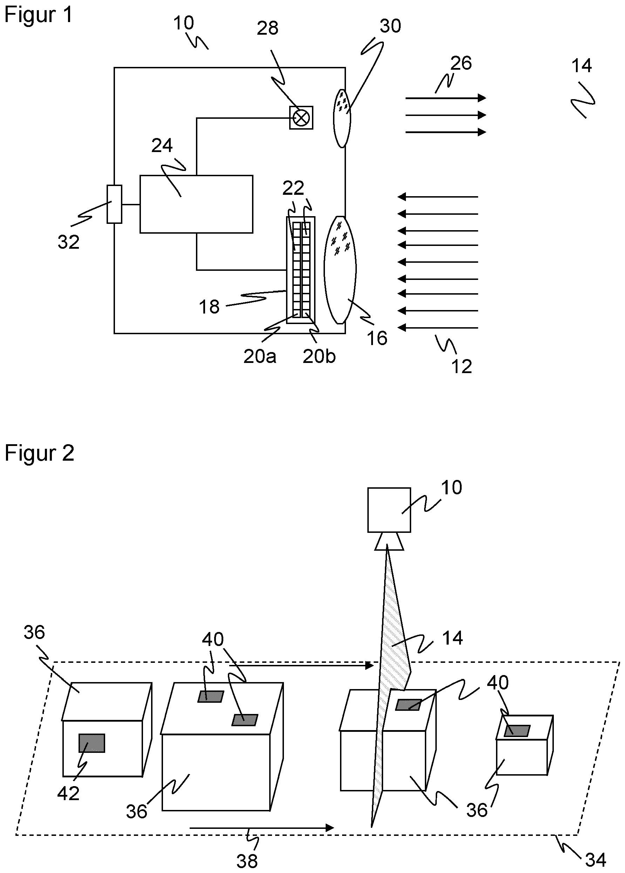

Figur 1 zeigt eine sehr vereinfachte Blockdarstellung einer Kamera 10 in einer Ausführungsform als Zeilenkamera. Die Kamera 10 erfasst Empfangslicht 12 aus einem Erfassungsbereich 14 durch ein Aufnahmeobjektiv 16, das hier nur durch eine einfache Linse repräsentiert ist. Ein zeilenförmiger Bildsensor 18 erzeugt Bilddaten des Erfassungsbereichs 14 und der dort gegebenenfalls vorhandenen Objekte und Codebereiche. Der Bildsensor 18 weist zumindest zwei Zeilen 20a-b von lichtempfindlichen Empfangspixeln 22 auf, wobei in Zeilenrichtung eine Vielzahl von hunderten, tausenden oder noch mehr Empfangspixeln 22 vorgesehen sind.

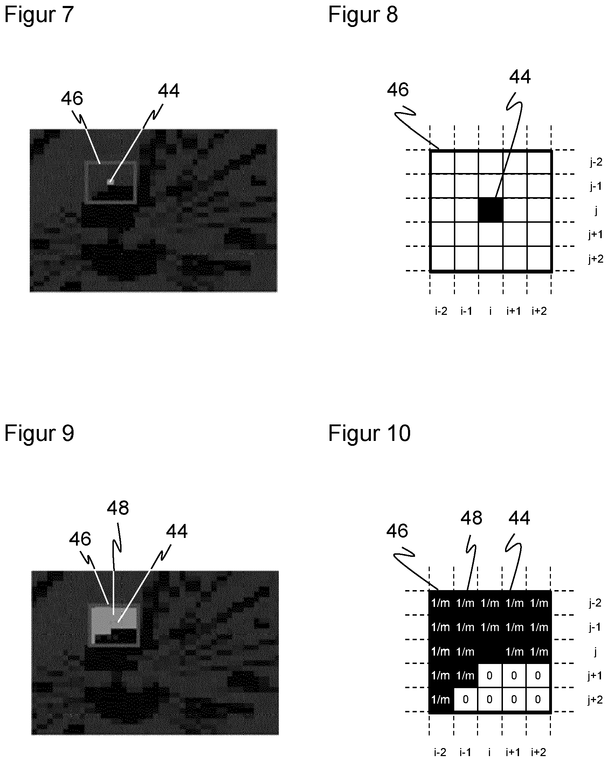

Die Bilddaten des Bildsensors 18 werden von einer Steuer- und Auswertungseinheit 24 ausgelesen. Die Steuer- und Auswertungseinheit 24 ist auf einem oder mehreren digitalen Bausteinen implementiert, beispielsweise Mikroprozessoren, ASICs, FPGAs oder dergleichen, die auch ganz oder teilweise außerhalb der Kamera 10 vorgesehen sein können. Ein bevorzugter Teil der Auswertung besteht darin, erfasste Bildzeilen zu einem Gesamtbild aneinanderzureihen. Ansonsten können bei der Auswertung die Bilddaten vorbereitend gefiltert, geglättet, auf bestimmte Bereiche zugeschnitten oder binarisiert werden. Eine Rauschunterdrückung wird später unter Bezugnahme auf die Figuren 7 bis 12 näher erläutert. In einer bevorzugten Ausführungsform der Kamera 10 als Codeleser erfolgt typischerweise eine Segmentierung, in der einzelne Objekte und Codebereiche aufgefunden werden. Die Codes in diesen Codebereichen werden dann decodiert, es wird also die in den Codes enthaltene Information ausgelesen.

Um den Erfassungsbereich 14 mit Sendelicht 26 ausreichend hell auszuleuchten, ist eine Beleuchtungseinrichtung 28 mit einer Sendeoptik 30 vorgesehen, die abweichend von der Darstellung auch extern sein kann. An einer Schnittstelle 32 der Kamera 10 können Daten ausgegeben werden, und zwar sowohl gelesene Codeinformationen als auch sonstige Daten in verschiedenen Verarbeitungsstufen, wie Rohbilddaten, vorverarbeitete Bilddaten, identifizierte Objekte oder noch nicht decodierte Codebilddaten. Umgekehrt ist möglich, die Kamera 10 über die Schnittstelle 32 oder eine weitere Schnittstelle zu parametrieren.

Figur 2 zeigt eine mögliche Anwendung der Kamera 10 in Montage an einem Förderband 34, welches Objekte 36 in einer Förderrichtung 38, wie durch den Pfeil angedeutet, durch den Erfassungsbereich 14 der Kamera 10 fördert. Die Objekte 36 können an ihren Außenflächen Codebereiche 40 tragen. Aufgabe der Kamera 10 ist, die Codebereiche 40 zu erkennen, die dort angebrachten Codes auszulesen, zu dekodieren und dem jeweils zugehörigen Objekt 36 zuzuordnen. Um auch seitlich angebrachte Codebereiche 42 zu erkennen, werden vorzugsweise mehrere Kameras 10 aus unterschiedlicher Perspektive eingesetzt. Es kann zusätzliche Sensoren geben, beispielsweise einen vorgelagerten Laserscanner zur Erfassung der Geometrie der Objekte 36 oder einen Inkrementalgeber zur Erfassung der Geschwindigkeit des Förderbandes 34.

Der Erfassungsbereich 14 der Kamera 10 ist entsprechend dem zeilenförmigen Bildsensor 18 eine Ebene mit einem zeilenförmigen Lesefeld. Indem die Objekte 36 in der Förderrichtung 38 zeilenweise aufgenommen werden, entsteht nach und nach ein Gesamtbild der vorbeigeförderten Objekte 36 samt der Codebereiche 40. Die Zeilen 20a-b liegen dabei so nahe beieinander, dass sie praktisch den gleichen Objektabschnitt erfassen. Alternativ wird ein Versatz rechnerisch oder dadurch kompensiert, dass die Zeilen mit einem kleinen Zeitversatz ausgelesen werden.

Die Kamera 10 erfasst mit einem Bildsensor 18 einerseits ein Grauwertbild oder Schwarzweißbild, das für das Codelesen genutzt wird. Zusätzlich wird auch eine Farbinformation beziehungsweise ein Farbbild gewonnen. Die Farbinformation kann für eine Vielzahl von Zusatzfunktionen genutzt werden. Ein Beispiel ist die Klassifizierung von Objekten 36, etwa um herauszufinden, ob es sich um ein Paket, einen Briefumschlag oder einer Tüte handelt. Es kann festgestellt werden, ob ein Förderbandbehältnis leer ist, wie eine Schale eines Schalenförderers oder eine Kiste. Das Segmentieren der Bilddaten in Objekte 36 oder Codebereiche 40 kann anhand der Farbinformation vorgenommen oder davon unterstützt werden. Es können zusätzliche Bilderkennungsaufgaben gelöst werden, wie die Erkennung bestimmter Aufdrucke oder Aufkleber beispielsweise zur Gefahrgutkennzeichnung, oder Schriften gelesen werden (OCR, Optical Character Recognition).

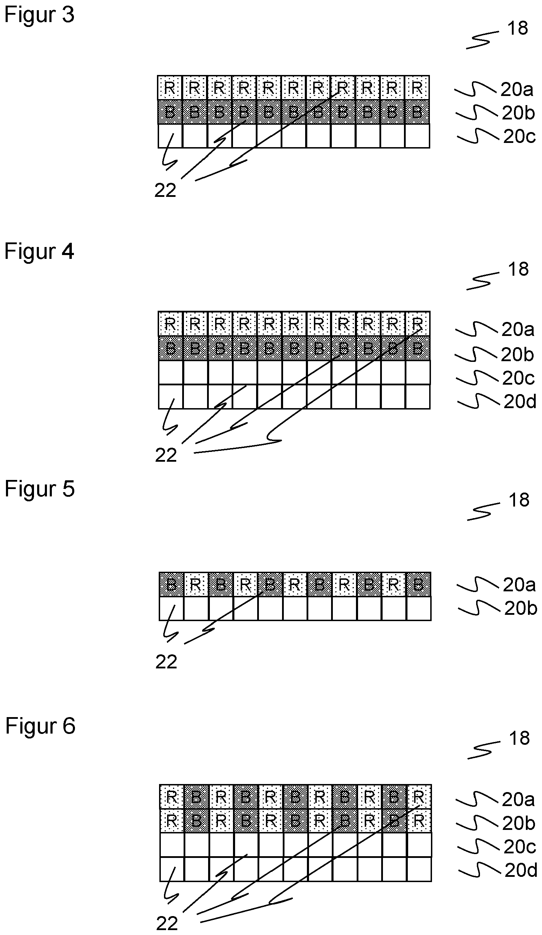

Die Figuren 3 bis 6 zeigen einige Beispiele von Ausführungsformen des Bildsensors 18 für eine Erfassung von Schwarzweißbildern und Farbinformationen. Gemeinsam ist diesen Ausführungsformen, dass zumindest eine der Zeilen 20a-d eine monochrome oder weiße Zeile ist, deren Empfangspixel 22 in den Grenzen der Hardware Licht über das gesamte Spektrum erfassen. Zumindest eine weitere Zeile 20a-d ist eine farbige Zeile, deren Empfangspixel 22 nur für eine bestimmte Farbe empfindlich sind, insbesondere durch entsprechende Farbfilter. Die Verteilung der Farben über die jeweiligen Empfangspixel 22 der farbigen Zeilen unterscheidet sich je nach Ausführungsform. Das Vorsehen mindestens einer vollständigen weißen Zeile ist bevorzugt, weil dadurch ein Grauwertbild in voller Auflösung aufgenommen wird. Ebenso ist eine Trennung in weiße und farbige Zeilen übersichtlicher. Prinzipiell sind jedoch abweichend Muster mit innerhalb der Zeilen 20a-d gemischten weißen und farbigen Empfangspixeln 22 vorstellbar. Die jeweiligen Empfangspixel 22 gleicher spektraler Empfindlichkeit werden in einem Monokanal für das Grauwertbild beziehungsweise je einem Farbkanal für ein Einfarbbild zusammengefasst, beispielsweise für rot empfindliche Empfangspixel 22 in einem roten Farbkanal für ein Rotbild und für blau empfindliche Empfangspixel 22 in einem blauen Farbkanal für ein Blaubild.

Figur 3 zeigt eine Ausführungsform mit je einer roten Zeile 20a, einer blauen Zeile 20b und einer weißen Zeile 20c. Die Zeilen 20a-c sind also in sich homogen und die Empfangspixel 22 innerhalb einer Zeile 20a-c für ein gleiches optisches Spektrum empfindlich. Figur 4 zeigt eine Variante mit einer zusätzlichen weißen Zeile 20d.

In der Ausführungsform nach Figur 5 sind für rot und für blau empfindliche Empfangspixel 22 innerhalb einer farbigen Zeile 20a alternierend gemischt. Dadurch ist in Kombination mit einer weißen Zeile 20b ein Aufbau mit insgesamt nur zwei Zeilen möglich. Figur 6 zeigt eine Variante, in der sowohl die farbige Zeile 20a-b als auch die weiße Zeile 20c-d gedoppelt ist.

In den Ausführungsformen gemäß Figur 5 und 6 unterscheidet sich die Auflösung in den einzelnen Farbkanälen von derjenigen des Monokanals. Eine Auflösungsanpassung durch Interpolation beziehungsweise Binning oder dergleichen ist vorstellbar. Die gezeigten Beispiele sind nur eine Auswahl basierend auf den Grundfarben rot und blau mit weiß (RBW). Weitere Ausführungsformen nutzen andere Farbfilter und Farben. So wäre auch die Verwendung von grün mit rot oder blau (RGW, BGW) oder aller drei Grundfarben (RGBW) denkbar. Weiterhin kommen auch die subtraktiven Grundfarben blaugrün (cyan), purpur (magenta) und gelb in analogen Kombinationen in Betracht (CMW, CYW, MYW oder CMYW). Eine fehlende Grundfarbe kann aus Weiß rekonstruiert werden. Ein Helligkeits- und/oder Farbabgleich ist von Vorteil, um eine farbtreuere Aufnahme zu erreichen.

Die bisher erläuterte Zeilenkamera mit einem Monokanal und einem Farbkanal ist eine bevorzugte Ausführungsform. Die Erfindung ist aber darauf nicht beschränkt. Der Bildsensor 18 kann auch eine andere Form aufweisen, insbesondere mit einer Matrixanordnung von Pixeln in einer Matrixkamera. Anstelle eines Mono- und eines oder mehrere Farbkanäle genügt es, wenn beliebige zwei Aufnahmekanäle vorgesehen sind, die sich in ihrer Empfindlichkeit oder Sensitivität unterscheiden, so dass Bilddaten mit unterschiedlichem Signal-Rausch-Verhältnis entstehen. Dabei wird jeweils der gleiche Objektbereich von beiden Aufnahmekanäle und damit doppelt aufgenommen. Zumindest sollte sich der Aufnahmebereich der beiden Aufnahmekanäle überlappen, die nun folgende Rauschunterdrückung bezieht sich dann auf den Überlappungsbereich. In den nicht überlappenden Bereichen kann keine oder eine andere Rauschunterdrückung eingesetzt werden, insbesondere indem Werte eines Filterkernes für Pixel aus nicht überlappenden Bereichen auf feste Vorgabewerte gesetzt werden. Die Rauschunterdrückung ist vorzugsweise in einem FPGA der Steuer- und Auswertungseinheit 24 implementiert.

Figur 7 zeigt ein Beispielbild von Bilddaten aus dem Monokanal. Wie unter Bezugnahme auf die Figuren 1 bis 6 erläutert, gibt es zwei Bilder aus den beiden Aufnahmekanälen: Ein mit höherer Sensitivität des ersten Aufnahmekanals aufgenommenes Bild wie dargestellt sowie ein nicht gezeigtes mit geringerer Sensitivität des zweiten Aufnahmekanals aufgenommenes Bild des gleichen Objektbereichs. Das Bild des ersten Aufnahmekanals ist vorzugsweise ein Schwarzweißbild und das Bild des zweiten Aufnahmekanals ein Farbbild, das seinerseits aus mehreren Bildern beispielsweise in Grundfarben aufgebaut sein kann, und so werden die beiden Bilder im Folgenden ohne Beschränkung der Allgemeinheit angesprochen.

Die Rauschunterdrückung soll auf dem Farbbild wirken, um dort das Signal-Rausch-Verhältnis zu verbessern. Das entsprechende Rauschunterdrückungsfilter wird jedoch anhand des Schwarzweißbildes erzeugt oder parametriert. Dazu wird jeweils ein Pixel 44 betrachtet, das im Zentrum einer Nachbarschaft oder Umgebung 46 liegt. Ein dezentriertes Pixel ist ebenso denkbar. Das wird nicht getrennt diskutiert, zumal dies ebenso durch Nullen am Rand eines zentrierten Rauschunterdrückungsfilters erreicht wird. Auf dem gleichen Weg kann auch eine effektive Abweichung von einer rechteckigen Form der Umgebung 46 erreicht werden, die deshalb ohne Einschränkung vorausgesetzt wird. Während der Rauschunterdrückung ist jedes Pixel wechselnd einmal das betrachtete Pixel 44, oder zumindest gilt das für alle Pixel in einem interessierenden Bildausschnitt.

Figur 8 zeigt die Umgebung 46 um das betrachtete Pixel 44 auf einem formalisierten Pixelraster. Entsprechend der Umgebung 46 soll ein Filterkern für das betrachtete Pixel 44 gefunden werden. Das betrachtete Pixel 44 liegt an der Position (i,j). Als Umgebung 46 wird ein Ausschnitt mit n x n Pixeln angenommen, hier rein beispielhaft n=5. Das ergibt die gezeigte Umgebung 46 mit den Positionen (i-2:i+2, j-2:j+2). Es wurde bereits ausgeführt, dass jegliche Abweichungen von einer zentrierten Matrix möglich und besonders einfach durch Nullen in dem gesuchten Filterkern implementierbar sind. Der Filterkern ist lokal: Wenn während der fortgesetzten Bearbeitung das betrachtete Pixel 44 wechselt, insbesondere in einer Iteration über i und j, ändert sich auch der Filterkern.

Iteration kann im Übrigen eine sequentielle Bearbeitung implizieren, aber auch eine Parallelisierung mit simultaner Bearbeitung mehrerer betrachteter Pixel 44 ist möglich.

Der Grauwert G(i,j) des betrachteten Pixels 44 ist bekannt. Es wird nun nach Pixeln in der Umgebung 46 gesucht, die zu dem betrachteten Pixel 44 ähnlich sind. Dazu wird eine symmetrische Schwelle e festgelegt. Für jedes Pixel der Umgebung 46 an den Positionen (i-2:i+2, j-2:j+2) wird geprüft, ob dessen Grauwert G mit der durch die Schwelle e gegebenen Toleranz übereinstimmt: G(i,j) - e ≤ G ≤ G(i,j)+e. Ist dieses Ähnlichkeitskriterium erfüllt, so wird der entsprechende Eintrag im Filterkern auf Eins gesetzt, sonst auf Null.

Figur 9 zeigt nochmals das Beispielbild der Figur 7, wobei nun derjenige ähnliche Teil 48 der Umgebung 46 hervorgehoben ist, wo die Pixel das Ähnlichkeitskriterium erfüllen und folglich die Einträge des Filterkerns auf Eins gesetzt sind. Durch die Ähnlichkeit im Grauwert besteht eine hohe Chance, dass es sich hier um eine gemeinsame Objektstruktur handelt.

Figur 10 zeigt die Umgebung 46 um das betrachtete Pixel 44 und den ähnlichen Teil 48 der Figur 9 auf dem formalisierten Pixelraster gemäß Figur 8. Dabei sind die Pixel des ähnlichen Teils 48 schwarz und die verbleibenden, nicht ähnlichen Pixel weiß dargestellt. Im Filterkern wird den Pixeln des ähnlichen Teils 48 zunächst der Wert Eins und den verbleibenden, nicht ähnlichen Pixeln der Wert Null zugewiesen. In einem vorteilhaften Normierungsschritt wird dann noch die Anzahl m der Pixel des ähnlichen Teils 48 gezählt, wozu einfach die Summe über den bisher ermittelten Filterkern gebildet werden kann. Die Einsen des Filterkerns werden dann durch den Kehrwert 1/m der Anzahl m ersetzt. In dieser normierten Form kann der Filterkern unmittelbar auf das Farbbild angewandt werden. Ansonsten sollte die Anzahl m beim Filtern berücksichtigt werden.

Der Filterkern ist aus dem Schwarzweißbild erzeugt, wird aber nun auf das Farbbild angewandt. Dazu wird für ein jeweiliges betrachtetes Pixel (i,j) nun des Farbbildes jedes Pixel in einer Umgebung des Farbbildes mit dem zugehörigen Eintrag des Filterkerns punktweise multipliziert und dem betrachteten Pixel (i,j) die Summe dieser Beiträge zugewiesen. Es handelt sich folglich um eine Mittelung über eine Umgebung des Farbbildes, die sich an die herkömmliche Faltung mit einem Glättungs- oder Mittelungskern anlehnt. Es gibt aber einen entscheidenden Unterschied: der Filterkern ist nicht global vorgegeben, sondern lokal je betrachtetem Pixel (i,j) durch eine Ähnlichkeit an gleicher Stelle des Schwarzweißbildes bedingt. Es fließt nur der Teil der Umgebung des Farbbildes ein, wo im Schwarzweißbild eine hinreichende Ähnlichkeit zu dem betrachteten Pixel 44 besteht. Dabei wird der ursprüngliche Wert des Pixels (i,j) entweder bei der Anzahl m mitgezählt und gleichgewichtet, oder dieser Wert wird gezielt höher beziehungsweise niedriger gewichtet.

Die Faltung mit einem Filterkern ist eine besonders einfache Implementierung, aber die Erfindung ist nicht auf eine bestimmte Weise beschränkt, wie die Ähnlichkeit im Schwarzweißbild den Einfluss der Umgebung des Farbbildes bei der Rauschunterdrückung bedingt. Ferner ist es einfach und führt zu guten Ergebnissen, ein digitales Ähnlichkeitskriterium zu verwenden, ob ein Pixel aus der Umgebung beiträgt oder nicht. Alternativ sind aber auch quantifizierende Gewichte denkbar, die insbesondere vom Ausmaß der Ähnlichkeit oder Unähnlichkeit abhängen, insbesondere mittels einer Gewichtungsfunktion in Abhängigkeit vom Grauwertunterschied IG - G(i,j)| des jeweiligen Pixels der Umgebung 46 mit Grauwert G.

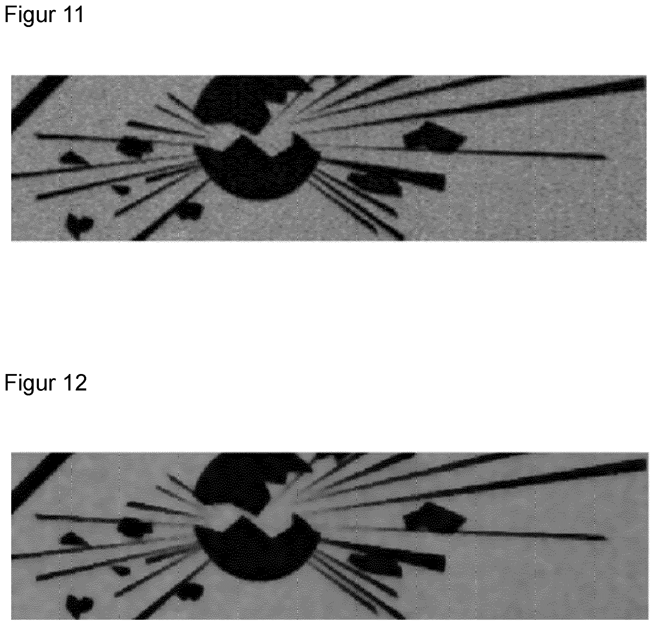

Die Figuren 11 und 12 zeigen ein Beispielbild vor und nach Anwendung der erfindungsgemäßen Rauschunterdrückung. Es ist allein darstellungsbedingt ein Schwarzweißbild und daher etwas verwirrend, denn diese Beispielbilder sind die Farbbilder aus dem zweiten Aufnahmekanal. Im Gegensatz dazu waren die Beispielbilder der Figuren 7 und 9 nicht nur darstellungsbedingt, sondern tatsächlich Schwarzweißbilder des ersten Aufnahmekanals, aus denen vorbereitend der jeweilige lokale Filterkern anhand der Ähnlichkeit von Pixeln in der Umgebung 46 des betrachteten Pixels 44 aufgefunden wurde.

In Figur 11 sind rauschbedingte eingestreute dunkle Flecken und unscharfe Kanten erkennbar. Nach der erfindungsgemäßen Rauschunterdrückung sind diese Rauscheffekte deutlich sichtbar erheblich reduziert, ohne dass räumliche Auflösung verloren geht.

## Patentansprüche

1. Kamera (10), insbesondere Codeleser zum Lesen eines optischen Codes (40), mit einem Bildsensor (18), der einen ersten Aufnahmekanal einer ersten Empfindlichkeit zur Erfassung erster Bilddaten mit ersten Pixeln und einen zweiten Aufnahmekanal einer zweiten Empfindlichkeit kleiner der ersten Empfindlichkeit zur Erfassung zweiter Bilddaten mit zweiten Pixeln aufweist, wobei erste Pixel und zweite Pixel einander durch Aufnahme eines gleichen Objektbereichs zugeordnet sind, sowie mit einer Steuer- und Auswertungseinheit (24) zur Verarbeitung der Bilddaten, die dafür ausgebildet ist, Rauscheffekte in den zweiten Bilddaten mit einem Rauschunterdrückungsfilter zu unterdrücken, das einem jeweiligen betrachteten zweiten Pixel auf Basis zweiter Pixel in einer Umgebung des betrachteten zweiten Pixels einen neuen Wert zuweist,
**dadurch gekennzeichnet,**
**dass** das Rauschunterdrückungsfilter die zweiten Pixel in der Umgebung mit einer Gewichtung berücksichtigt, die davon abhängt, wie ähnlich den zweiten Pixeln zugeordnete erste Pixel dem zugeordneten ersten Pixel (44) des jeweiligen betrachteten zweiten Pixels sind, so dass in der Bearbeitung mit dem Rauschunterdrückungsfilter die den ähnlichen ersten Pixeln zugeordneten zweiten Pixel stärker und die den nicht oder weniger ähnlichen ersten Pixeln zugeordneten zweiten Pixel weniger in den neuen Wert des jeweiligen betrachteten zweiten Pixels einfließen.

2. Kamera (10) nach Anspruch 1,
wobei die Steuer- und Auswertungseinheit (24) dafür ausgebildet ist, für das Rauschunterdrückungsfilter nur zweite Pixel in der Umgebung zu berücksichtigen, deren zugeordnetes erstes Pixel ein Ähnlichkeitskriterium zu dem ersten Pixel (44) erfüllt, das dem jeweiligen betrachteten zweiten Pixel zugeordnet ist.

3. Kamera (10) nach Anspruch 2,
wobei das Ähnlichkeitskriterium mindestens eine Schwelle aufweist, mit der ein Unterschied zwischen einem ersten Pixel in der Umgebung und dem zugeordneten ersten Pixel (44) des jeweiligen betrachteten zweiten Pixel bewertet wird.

4. Kamera (10) nach einem der vorhergehenden Ansprüche,
wobei das Rauschunterdrückungsfilter ein Mittelungsfilter ist.

5. Kamera (10) nach einem der vorhergehenden Ansprüche,
wobei das Rauschunterdrückungsfilter einen Filterkern aufweist, der eine Umgebung um ein jeweiliges betrachtetes Pixel definiert und dessen Werte insbesondere entsprechend einer Ähnlichkeit erster Pixel in einer Umgebung (46) zu einem zentralen ersten Pixel (44) gesetzt sind.

6. Kamera (10) nach Anspruch 5,
wobei die Steuer- und Auswertungseinheit (24) dafür ausgebildet ist, den Filterkern mit Nullen zu belegen, wo ein Ähnlichkeitskriterium nicht erfüllt ist, und/oder mit untereinander gleich großen nichtverschwindenden Werten zu belegen, wo ein Ähnlichkeitskriterium erfüllt ist.

7. Kamera (10) nach Anspruch 5 oder 6,
wobei die Steuer- und Auswertungseinheit (24) dafür ausgebildet ist zu zählen, wie oft der Filterkern Werte ungleich Null aufweist, und insbesondere den Filterkern mit dieser Anzahl (m) zu normieren.

8. Kamera (10) nach einem der vorhergehenden Ansprüche,
wobei die Steuer- und Auswertungseinheit (24) dafür ausgebildet ist, die Auflösung der ersten Bilddaten und der zweiten Bilddaten aufeinander anzupassen.

9. Kamera (10) nach einem der vorhergehenden Ansprüche,
wobei der erste Aufnahmekanal als Monokanal mit Empfindlichkeit für weißes Licht für die Aufnahme von Bilddaten eines Grauwertbildes ausgebildet ist.

10. Kamera (10) nach einem der vorhergehenden Ansprüche,
wobei der zweite Aufnahmekanal als mindestens ein Farbkanal mit Empfindlichkeit für Licht einer bestimmten Farbe zur Aufnahme von Bilddaten der Farbe ausgebildet ist.

11. Kamera (10) nach Anspruch 10,
wobei der zweite Aufnahmekanal mehrere Farbkanäle unterschiedlicher Farben aufweist.

12. Kamera (10) nach einem der vorhergehenden Ansprüche,
wobei der Bildsensor (18) als Zeilensensor mit mindestens zwei Zeilen (20a-b) von Lichtempfangselementen (22) ausgebildet ist, wobei insbesondere eine Zeile (20a-b) jeweils vollständig dem ersten Aufnahmekanal oder dem zweiten Aufnahmekanal zugeordnet ist.

13. Kamera (10) nach einem der vorhergehenden Ansprüche,
die stationär über einem Strom aufzunehmender Objekte (36) montiert ist.

14. Kamera (10) nach einem der vorhergehenden Ansprüche,
wobei die Steuer- und Auswertungseinheit (24) dafür ausgebildet ist, aus dem ersten Aufnahmekanal ein Grauwertbild und aus dem zweiten Aufnahmekanal ein Farbbild zu erzeugen.

15. Verfahren zur Erfassung von ersten Bilddaten mit ersten Pixeln in einem ersten Aufnahmekanal einer ersten Empfindlichkeit eines Bildsensors (18) und zur Erfassung von zweiten Bilddaten mit zweiten Pixeln in einem zweiten Aufnahmekanal einer zweiten Empfindlichkeit kleiner der ersten Empfindlichkeit des Bildsensors (18), wobei erste Pixel und zweite Pixel einander durch Aufnahme eines gleichen Objektbereichs zugeordnet sind, wobei Rauscheffekte in den zweiten Bilddaten mit einem Rauschunterdrückungsfilter unterdrückt werden, das einem jeweiligen betrachteten zweiten Pixel auf Basis zweiter Pixel in einer Umgebung des betrachteten zweiten Pixels einen neuen Wert zuweist,
**dadurch gekennzeichnet,**
**dass** das Rauschunterdrückungsfilter die zweiten Pixel in der Umgebung mit einer Gewichtung berücksichtigt, die davon abhängt, wie ähnlich den zweiten Pixeln zugeordnete erste Pixel dem zugeordneten ersten Pixel (44) des jeweiligen betrachteten zweiten Pixels sind, so dass in der Bearbeitung mit dem Rauschunterdrückungsfilter die den ähnlichen ersten Pixeln zugeordneten zweiten Pixel stärker und die den nicht oder weniger ähnlichen ersten Pixeln zugeordneten zweiten Pixel weniger in den neuen Wert des jeweiligen betrachteten zweiten Pixels einfließen.

## Claims

1. A camera (10), in particular code reader for reading an optical code (40), having an image sensor (18) which has a first recording channel of a first sensitivity for recording first image data with first pixels and a second recording channel of a second sensitivity lower than the first sensitivity for recording second image data with second pixels, wherein first pixels and second pixels are assigned to each other by recording an identical object area, and having a control and evaluation unit (24) for processing the image data, configured to suppress noise effects in the second image data with a noise suppression filter which assigns a new value to a respective second pixel under consideration on the basis of second pixels in a neighborhood of the second pixel under consideration, **characterized in that** the noise suppression filter takes into account the second pixels in the neighborhood with a weighting which depends on how similar first pixels assigned to the second pixels are to the assigned first pixel (44) of the respective second pixel under consideration, so that in the processing with the noise suppression filter the second pixels assigned to the similar first pixels are included more strongly and the second pixels assigned to the not or less similar first pixels are included less in the new value of the respective second pixel under consideration.

2. The camera (10) according to claim 1,
wherein the control and evaluation unit (24) is configured to take into account for the noise reduction filter only second pixels in the neighborhood whose associated first pixel fulfills a similarity criterion to the first pixel (44) which is associated with the respective second pixel under consideration.

3. The camera (10) according to claim 2,
wherein the similarity criterion comprises at least one threshold by which a difference between a first pixel in the neighborhood and the associated first pixel (44) of the respective second pixel under consideration is evaluated.

4. The camera (10) according to any of the preceding claims,
wherein the noise reduction filter is an averaging filter.

5. The camera (10) according to any of the preceding claims,
wherein the noise reduction filter comprises a filter core defining a neighborhood around a respective pixel under consideration and whose values in particular are set according to a similarity of first pixels in a neighborhood (46) to a central first pixel (44).

6. The camera (10) according to claim 5,
wherein the control and evaluation unit (24) is configured to assign zeros to the filter core where a similarity criterion is not fulfilled and/or to assign non-zero values of equal size to one another where a similarity criterion is fulfilled.

7. The camera (10) according to claim 5 or 6,
wherein the control and evaluation unit (24) is configured to count how often the filter core has values other than zero, and in particular to normalize the filter core by this number (m).

8. The camera (10) according to any of the preceding claims,
wherein the control and evaluation unit (24) is configured to adapt the resolution of the first image data and the second image data to each other.

9. The camera (10) according to any of the preceding claims,
wherein the first recording channel is configured as a monochannel with sensitivity to white light for recording image data of a gray-scale image.

10. The camera (10) according to any of the preceding claims,
wherein the second recording channel is configured as at least one color channel with sensitivity to light of a specific color for recording image data of the color.

11. The camera (10) according to claim 10,
wherein the second recording channel comprises a plurality of color channels of different colors.

12. The camera (10) according to any of the preceding claims,
wherein the image sensor (18) is configured as a line sensor with at least two lines (20a-b) of light-receiving elements (22), wherein in particular one line (20a-b) is completely assigned to the first recording channel or the second recording channel respectively.

13. The camera (10) according to any of the preceding claims,
which is mounted stationary above a stream of objects (36) to be recorded.

14. The camera (10) according to any of the preceding claims,
wherein the control and evaluation unit (24) is configured to generate a gray-scale image from the first recording channel and a color image from the second recording channel.

15. A method for acquiring first image data with first pixels in a first acquisition channel of a first sensitivity of an image sensor (18) and for acquiring second image data with second pixels in a second acquisition channel of a second sensitivity lower than the first sensitivity of the image sensor (18), first pixels and second pixels being assigned to one another by recording a same object area, noise effects in the second image data being suppressed with a noise suppression filter which assigns a new value to a respective second pixel under consideration on the basis of second pixels in a neighborhood of the second pixel under consideration,
**characterized in that** the noise suppression filter takes into account the second pixels in the neighborhood with a weighting that depends on how similar first pixels assigned to the second pixels are to the assigned first pixel (44) of the respective second pixel under consideration, so that in the processing with the noise suppression filter the second pixels assigned to the similar first pixels are included more strongly and the second pixels assigned to the not or less similar first pixels are included less in the new value of the respective second pixel under consideration.

## Revendications

1. Caméra (10), en particulier lecteur de code pour la lecture d'un code optique (40), avec un capteur d'image (18) comprenant un premier canal d'enregistrement d'une première sensibilité pour la saisie de premières données d'image avec des premiers pixels et un deuxième canal d'enregistrement d'une deuxième sensibilité inférieure à la première sensibilité pour la saisie de deuxièmes données d'image avec des deuxièmes pixels, dans lequel les premiers pixels et les deuxièmes pixels sont attribués les uns aux autres par l'enregistrement d'une même zone d'objet, ainsi qu'avec une unité de commande et d'évaluation (24) pour le traitement des données d'image, configurée pour supprimer les effets de bruit dans les deuxièmes données d'image avec un filtre de suppression de bruit qui attribue une nouvelle valeur à un deuxième pixel considéré respectif sur la base de deuxièmes pixels dans un environnement du deuxième pixel considéré,
**caractérisé en ce que**
le filtre de suppression de bruit considère les deuxièmes pixels dans l'environnement avec une pondération qui dépend de la similitude entre les premiers pixels attribués aux deuxièmes pixels et le premier pixel attribués (44) du deuxième pixel considéré respectif, de sorte que lors du traitement avec le filtre de suppression de bruit, les deuxièmes pixels attribués aux premiers pixels similaires sont inclus plus fortement et les deuxièmes pixels attribués aux premiers pixels non similaires ou moins similaires sont inclus moins fortement dans la nouvelle valeur du deuxième pixel considéré respectif.

2. Caméra (10) selon la revendication 1,
dans laquelle l'unité de commande et d'évaluation (24) est configurée pour ne considérer, pour le filtre de suppression de bruit, que des deuxièmes pixels dans l'environnement dont le premier pixel attribué remplit un critère de similitude avec le premier pixel (44) qui est attribué au deuxième pixel considéré respectif.

3. Caméra (10) selon la revendication 2,
dans laquelle le critère de similitude comprend au moins un seuil permettant d'évaluer une différence entre un premier pixel dans l'environnement et le premier pixel attribué (44) du deuxième pixel considéré respectif.

4. Caméra (10) selon l'une des revendications précédentes,
dans laquelle le filtre de suppression de bruit est un filtre de moyennage.

5. Caméra (10) selon l'une des revendications précédentes,
dans laquelle le filtre de suppression de bruit comprend un noyau de filtre définissant un environnement autour d'un pixel considéré respectif et dont les valeurs sont fixées en particulier en fonction d'une similitude de premiers pixels dans un environnement (46) par rapport à un premier pixel central (44).

6. Caméra (10) selon la revendication 5,
dans laquelle l'unité de commande et d'évaluation (24) est configurée pour attribuer des zéros au noyau du filtre lorsqu'un critère de similitude n'est pas rempli et/ou pour attribuer des valeurs non disparaissantes égales entre elles lorsqu'un critère de similitude est rempli.

7. Caméra (10) selon la revendication 5 ou 6,
dans laquelle l'unité de commande et d'évaluation (24) est configurée pour compter le nombre de fois où le noyau du filtre comprend des valeurs différentes de zéro, et en particulier pour normaliser le noyau du filtre avec ce nombre (m).

8. Caméra (10) selon l'une des revendications précédentes,
dans laquelle l'unité de commande et d'évaluation (24) est configurée pour adapter la résolution des premières données d'image et des deuxièmes données d'image l'une à l'autre.

9. Caméra (10) selon l'une des revendications précédentes,
dans laquelle le premier canal d'enregistrement est configuré comme un monocanal avec une sensibilité à la lumière blanche pour l'enregistrement de données d'image d'une image en niveaux de gris

10. Caméra (10) selon l'une des revendications précédentes,
dans laquelle le deuxième canal d'enregistrement est configuré comme au moins un canal de couleur avec une sensibilité à la lumière d'une couleur particulière pour enregistrer des données d'image de la couleur.

11. Caméra (10) selon la revendication 10,
dans laquelle le deuxième canal d'enregistrement comprend plusieurs canaux de couleurs de différentes couleurs.

12. Caméra (10) selon l'une des revendications précédentes,
dans laquelle le capteur d'image (18) est configuré comme un capteur linéaire avec au moins deux lignes (20a- b) d'éléments de réception de lumière (22), dans laquelle en particulier une ligne (20a- b) est entièrement attribuée au premier canal d'enregistrement ou au deuxième canal d'enregistrement respectivement.

13. Caméra (10) selon l'une des revendications précédentes,
qui est montée de manière stationnaire au-dessus d'un flux d'objets (36) à enregistrer.

14. Caméra (10) selon l'une des revendications précédentes,
dans laquelle l'unité de commande et d'évaluation (24) est configurée pour générer une image en niveaux de gris à partir du premier canal d'enregistrement et une image en couleurs à partir du deuxième canal d'enregistrement.

15. Procédé pour la saisie de premières données d'image avec des premiers pixels dans un premier canal d'enregistrement d'une première sensibilité d'un capteur d'image (18) et pour la saisie de deuxièmes données d'image avec des deuxièmes pixels dans un deuxième canal d'enregistrement d'une deuxième sensibilité inférieure à la première sensibilité du capteur d'image (18), dans lequel les premiers pixels et les deuxièmes pixels sont attribués les uns aux autres par l'enregistrement une même zone d'objet, dans lequel les effets de bruit dans les deuxièmes données d'image sont supprimés avec un filtre de suppression de bruit qui attribue une nouvelle valeur à un deuxième pixel considéré respectif sur la base de deuxièmes pixels dans un environnement du deuxième pixel considéré,
**caractérisé en ce que**
le filtre de suppression de bruit considère les deuxièmes pixels dans l'environnement avec une pondération qui dépend de la similitude entre les premiers pixels attribués aux deuxièmes pixels et le premier pixel attribués (44) du deuxième pixel considéré respectif, de sorte que lors du traitement avec le filtre de suppression de bruit, les deuxièmes pixels attribués aux premiers pixels similaires sont inclus plus fortement et les deuxièmes pixels attribués aux premiers pixels non similaires ou moins similaires sont inclus moins fortement dans la nouvelle valeur du deuxième pixel considéré respectif.
